# DEMANDE DE BREVET EUROPEEN

(11) **EP 4 817 477 A1**
(43) Date de publication de la demande: **07.10.2026**
(21) Numéro de dépôt: 26165889.2
(22) Date de dépôt: 18.03.2026
(51) Int. Cl.: A47J 31/44, A47J 31/46

(54) **SOUS-ENSEMBLE POUR APPAREIL DE PREPARATION DE BOISSONS**

(30) Priorité: 03.04.2025 FR 2503503
(71) Demandeur: SEB S.A., 69130 Ecully (FR)
(72) Inventeur: HIRON, Frédéric, 69134 ECULLY CEDEX (FR); L'APPARTIEN, Stéphane, 69134 ECULLY CEDEX (FR); FOULONNEAU, Stéphane, 69134 ECULLY CEDEX (FR); BICHET, Fabrice, 69134 ECULLY CEDEX (FR)
(74) Mandataire: SEB Développement

(57) **Abrégé**

Le sous-ensemble (11) comprend un corps principal (12) configuré pour être fixé à un châssis (3) d'un appareil de préparation de boissons et comprenant une paroi de support (13) comportant une première face munie d'un connecteur fluidique configuré pour être relié fluidiquement à un réservoir d'eau de l'appareil de préparation de boissons et une deuxième face (13.2) opposée à la première face ; et un débitmètre (16) fixé au corps principal (12) et relié fluidiquement au connecteur fluidique. Le corps principal (12) comprend un emplacement de réception (17) dans lequel est reçu le débitmètre (16), l'emplacement de réception (17) étant situé du côté de la deuxième face (13.2) de la paroi de support (13) de telle sorte que le connecteur fluidique et l'emplacement de réception (17) sont disposés de part et d'autre de la paroi de support (13).

## Description

### Domaine technique

La présente invention concerne le domaine des appareils de préparation de boissons, et plus particulièrement le domaine des machines à café automatiques.

### Etat de la technique

Un appareil de préparation de boissons, et plus particulièrement une machine à café automatique, comporte de façon connue notamment un châssis configuré pour reposer sur une surface de travail ; un réservoir d'eau monté sur le châssis ; un bloc de chauffe fixé au châssis et configuré pour produire de l'eau chaude et/ou de la vapeur ; une chambre d'infusion destinée être alimentée en mouture de café ; et un circuit d'alimentation en eau configuré pour relier le réservoir d'eau au bloc de chauffe (notamment pour la préparation d'une boisson chaude) ou directement à la chambre d'infusion (notamment pour la préparation d'une boisson infusée à froid).

Un tel circuit d'alimentation en eau comporte notamment un connecteur fluidique configuré pour être relié fluidiquement au réservoir d'eau, un débitmètre, un tuyau d'arrivée d'eau reliant fluidiquement le connecteur fluidique au débitmètre, une pompe à eau configurée pour alimenter en eau le bloc de chauffe ou la chambre d'infusion, et un tuyau de sortie d'eau reliant fluidiquement le débitmètre à la pompe à eau.

Une telle configuration de ce circuit d'alimentation en eau oblige un opérateur à assembler les différents éléments constitutifs de ce dernier de manière séquentielle lors de l'assemblage final de l'appareil de préparation de boissons, ce qui d'une part complexifie l'opération d'assemblage de l'appareil de préparation de boissons, et augmente donc les coûts de fabrication de ce dernier, et d'autre part rend fastidieuse ladite opération d'assemblage. De plus, un tel assemblage séquentiel est difficilement automatisable.

### Résumé de l'invention

La présente invention vise à remédier à tout ou partie de ces inconvénients.

Le problème technique à la base de l'invention consiste notamment à fournir un sous-ensemble pour appareil de préparation de boissons qui soit de structure simple et économique, tout en permettant un assemblage aisé et rapide de l'appareil de préparation de boissons.

A cet effet, la présente invention concerne un sous-ensemble pour appareil de préparation de boissons, tel qu'une machine à café et par exemple une machine à café automatique, comprenant :
- un corps principal configuré pour être fixé, par exemple par vissage ou clipsage, à un châssis de l'appareil de préparation de boissons, le corps principal comprenant une paroi de support comportant une première face munie d'un connecteur fluidique configuré pour être relié fluidiquement à un réservoir d'eau de l'appareil de préparation de boissons lorsque le sous-ensemble est fixé au châssis de l'appareil de préparation de boissons et une deuxième face opposée à la première face, et
- un débitmètre fixé au corps principal et relié fluidiquement au connecteur fluidique,
le corps principal comprenant en outre un emplacement de réception dans lequel est reçu le débitmètre, l'emplacement de réception étant situé du côté de la deuxième face de la paroi de support de telle sorte que le connecteur fluidique et l'emplacement de réception sont disposés de part et d'autre de la paroi de support.

Une telle configuration du sous-ensemble, et notamment le fait que le connecteur fluidique et le débitmètre soient fixés sur le corps principal, permet de simplifier grandement l'assemblage final de l'appareil de préparation de boissons et de réduire également sensiblement la durée d'assemblage de ce dernier. En effet, l'opérateur n'a plus à fixer de manière séquentielle notamment le connecteur fluidique et le débitmètre sur le châssis de l'appareil de préparation de boissons, il lui suffit au contraire de fixer le sous-ensemble (qui est avantageusement réalisé en dehors de la ligne d'assemblage final), par exemple par vissage ou clipsage, sur le châssis de l'appareil de préparation de boissons.

De plus, une telle opération de fixation du sous-ensemble sur le châssis de l'appareil de préparation de boissons peut être facilement automatisable.

En outre, le fait que le débitmètre et le connecteur fluidique soient disposés de part et d'autre de la paroi de support permet de faciliter l'opération de fixation du corps principal sur le châssis, et donc de faciliter encore l'opération d'assemblage de l'appareil de préparation de boissons.

Le sous-ensemble peut en outre présenter une ou plusieurs des caractéristiques suivantes, prises seules ou en combinaison.

Selon un mode de réalisation de l'invention, le corps principal comporte un dispositif de fixation configuré pour fixer le débitmètre dans l'emplacement de réception. Ces dispositions assurent un positionnement stable et fiable du débitmètre sur le corps principal, et évitent toute chute du débitmètre lors du transport du sous-ensemble.

Selon un mode de réalisation de l'invention, le dispositif de fixation comporte au moins une patte de fixation configuré pour fixer le débitmètre dans l'emplacement de réception. De façon avantageuse, le dispositif de fixation comporte plusieurs pattes de fixation qui sont décalées angulairement par rapport à un axe central de l'emplacement de réception.

Selon un mode de réalisation de l'invention, l'au moins une patte de fixation est située sur le pourtour de l'emplacement de réception.

Selon un mode de réalisation de l'invention, l'emplacement de réception forme un logement de réception dans lequel est au moins en partie logé le débitmètre. Ces dispositions assurent un maintien ferme du débitmètre sur le corps principal.

Selon un mode de réalisation de l'invention, le logement de réception est ouvert vers le haut. De façon avantageuse, le logement de réception comporte une ouverture supérieure à travers laquelle le débitmètre est apte à être inséré dans le logement de réception.

Selon un mode de réalisation de l'invention, le connecteur fluidique est configuré pour être connecté au réservoir d'eau de l'appareil de préparation de boissons selon un mouvement de connexion qui est orienté sensiblement horizontalement lorsque l'appareil de préparation de boissons repose sur une surface horizontale.

Selon un mode de réalisation de l'invention, le connecteur fluidique s'étend sensiblement perpendiculairement à la paroi de support.

Selon un mode de réalisation de l'invention, le sous-ensemble comprend un tuyau d'arrivée d'eau, qui est par exemple souple, configuré pour relier fluidiquement le connecteur fluidique à une entrée d'eau du débitmètre, et un tuyau de sortie d'eau, qui est par exemple souple, configuré pour relier fluidiquement une sortie d'eau du débitmètre à une pompe à eau de l'appareil de préparation de boissons lorsque le sous-ensemble est fixé au châssis de l'appareil de préparation de boissons. Ces dispositions permettent de réduire encore la durée d'assemblage de l'appareil de préparation de boissons, et de faciliter encore l'assemblage de ce dernier.

Selon un mode de réalisation de l'invention, le tuyau d'arrivée d'eau et le tuyau de sortie d'eau sont situés du côté de la deuxième face de la paroi de support.

Selon un mode de réalisation de l'invention, la deuxième face de la paroi de support est munie d'au moins un relief de fixation configuré pour fixer le tuyau de sortie d'eau à la paroi de support. Ces dispositions assurent un positionnement optimal du tuyau de sortie d'eau, ce qui permet de réduire les pertes de charge au sein du circuit d'alimentation en eau.

Selon un mode de réalisation de l'invention, la deuxième face de la paroi de support est munie d'un organe de connexion fluidique qui est relié fluidiquement au connecteur fluidique et auquel est raccordé le tuyau d'arrivée d'eau.

Selon un mode de réalisation de l'invention, le connecteur fluidique et l'organe de connexion fluidique s'étendent sensiblement coaxialement et à l'opposé l'un de l'autre.

Selon un mode de réalisation de l'invention, le tuyau d'arrivée d'eau comporte une première portion d'extrémité qui est raccordée à l'organe de connexion fluidique et une deuxième portion d'extrémité qui est raccordée à l'entrée d'eau du débitmètre. Ces dispositions assurent un positionnement optimal du tuyau d'arrivée d'eau, ce qui permet de réduire encore les pertes de charge au sein du circuit d'alimentation en eau.

Selon un mode de réalisation de l'invention, le tuyau de sortie d'eau comporte une première portion d'extrémité qui est raccordée à la sortie d'eau du débitmètre et une deuxième portion d'extrémité qui est destinée à être raccordée à la pompe à eau lorsque le sous-ensemble est fixé au châssis de l'appareil de préparation de boissons.

Selon un mode de réalisation de l'invention, le sous-ensemble comprend un connecteur de puissance fixé, par exemple par vissage, au corps principal et auquel est destiné à être raccordé, par exemple de manière amovible, un cordon d'alimentation électrique de l'appareil de préparation de boissons. Ces dispositions permettent de réduire encore la durée d'assemblage de l'appareil de préparation de boissons, et de faciliter encore l'assemblage de ce dernier.

Selon un mode de réalisation de l'invention, le connecteur de puissance est configuré pour être orienté sensiblement horizontalement lorsque l'appareil de préparation de boissons repose sur une surface horizontale et que le sous-ensemble est fixé au châssis de l'appareil de préparation de boissons.

Selon un mode de réalisation de l'invention, le connecteur de puissance est agencé entre le débitmètre et l'organe de connexion fluidique.

Selon un mode de réalisation de l'invention, la deuxième face de la paroi de support est munie d'un organe de fixation auquel est fixé le connecteur de puissance.

Selon un mode de réalisation de l'invention, l'organe de fixation délimite un logement interne dans lequel est au moins en partie logé le connecteur de puissance.

Selon un mode de réalisation de l'invention, le tuyau de sortie d'eau s'étend autour de l'organe de fixation, et par exemple forme une boucle s'étendant autour de l'organe de fixation.

Selon un mode de réalisation de l'invention, le corps principal comporte une paroi supérieure s'étendant perpendiculairement à la paroi de support et positionnée au-dessus du débitmètre. La présence d'une telle paroi supérieure permet de protéger le débitmètre de ruissellement d'eau.

Selon un mode de réalisation de l'invention, le sous-ensemble comprend un faisceau électrique principal, également nommé faisceau de puissance ou faisceau électrique de puissance, comprenant des fils électriques fixés respectivement à des bornes de connexion du connecteur de puissance, et un connecteur électrique auquel sont reliés électriquement les fils électriques du faisceau électrique principal, le connecteur électrique étant apte à être raccordé à un dispositif de connexion électrique de l'appareil de préparation de boissons lorsque le sous-ensemble est fixé au châssis de l'appareil de préparation de boissons. Ces dispositions permettent de réduire encore la durée d'assemblage de l'appareil de préparation de boissons, et de faciliter encore l'assemblage de ce dernier.

Selon un mode de réalisation de l'invention, le corps principal, et par exemple la paroi de support, comporte un orifice de passage à travers lequel s'étendent les fils électriques du faisceau électrique principal.

Selon un mode de réalisation de l'invention, l'orifice de passage débouche dans le logement interne délimité par l'organe de fixation.

Selon un mode de réalisation de l'invention, le sous-ensemble comprend un faisceau de signal comportant un premier connecteur électrique raccordé électriquement au débitmètre et un deuxième connecteur électrique apte à être raccordé à un dispositif électrique, tel qu'un connecteur électrique ou une carte électronique, de l'appareil de préparation de boissons lorsque le sous-ensemble est fixé au châssis de l'appareil de préparation de boissons. Ces dispositions permettent de réduire encore la durée d'assemblage de l'appareil de préparation de boissons, et de faciliter encore l'assemblage de ce dernier.

Selon un mode de réalisation de l'invention, le corps principal, et par exemple la paroi de support, comporte une ouverture de passage à travers laquelle s'étendent des fils électriques du faisceau de signal.

Selon un mode de réalisation de l'invention, le corps principal comprend un logement d'accueil dans lequel est logée une carte de circuit imprimée appartenant à un dispositif de détection de niveau d'eau configuré pour détecter le niveau d'eau dans la réservoir d'eau de l'appareil de préparation de boissons. Ces dispositions permettent de réduire encore la durée d'assemblage de l'appareil de préparation de boissons, et de faciliter encore l'assemblage de ce dernier.

Selon un mode de réalisation de l'invention, le logement d'accueil est prévu sur la deuxième face de la paroi de support.

Selon un mode de réalisation de l'invention, les fils d'alimentation électrique de la carte de circuit imprimée s'étendent à travers l'ouverture de passage, et peuvent par exemple être intégrés au faisceau de signal.

Selon un mode de réalisation de l'invention, la paroi de support est configurée pour s'étendre sensiblement verticalement lorsque l'appareil de préparation de boissons repose sur une surface horizontale et que le sous-ensemble est fixé au châssis de l'appareil de préparation de boissons.

Selon un mode de réalisation de l'invention, le corps principal comporte une paroi inférieure s'étendant depuis un bord inférieur de la paroi de support, l'emplacement de réception étant prévu sur la paroi inférieure, et par exemple sur une face supérieure de la paroi supérieure.

Selon un mode de réalisation de l'invention, l'organe de connexion fluidique et le débitmètre sont disposés de part et d'autre du connecteur de puissance.

Selon un autre mode de réalisation de l'invention, l'organe de connexion fluidique et le connecteur de puissance sont disposés de part et d'autre du débitmètre.

La présente invention concerne en outre un appareil de préparation de boissons, tel qu'une machine à café et notamment une machine à café automatique, comprenant un châssis, un réservoir d'eau monté sur le châssis et un sous-ensemble selon la présente invention, le corps principal du sous-ensemble étant fixé au châssis.

Selon un mode de réalisation de l'invention, le sous-ensemble est situé au moins en partie à l'arrière du réservoir d'eau.

Selon un mode de réalisation de l'invention, le corps principal est configuré pour être fixé à une partie arrière du châssis, et par exemple à une portion inférieure de la partie arrière du châssis.

Selon un mode de réalisation de l'invention, l'appareil de préparation de boissons comprend une pompe à eau reliée fluidiquement au débitmètre, la pompe à eau étant située au moins en partie au-dessus du sous-ensemble.

Selon un mode de réalisation de l'invention, la pompe à eau est fixée au châssis de l'appareil de préparation de boissons.

Selon un mode de réalisation de l'invention, la pompe à eau est configurée pour être orientée sensiblement verticalement lorsque l'appareil de préparation de boissons repose sur une surface horizontale.

### Brève description des figures

L'invention sera mieux comprise à l'aide de la description qui suit en référence aux dessins schématiques annexés représentant, à titre d'exemples non limitatifs, deux formes d'exécution de cet appareil de préparation de boissons.
Figure 1 est une vue schématique d'un appareil de préparation de boissons selon un mode de réalisation de l'invention.
Figure 2 est une vue partielle en perspective arrière de l'appareil de préparation de boissons de la figure 1.
Figure 3 est une vue en perspective arrière d'un sous-ensemble de l'appareil de préparation de boissons de la figure 1.
Figure 4 est une vue en perspective avant du sous-ensemble de la figure 3.
Figure 5 est une vue partielle en coupe longitudinale de l'appareil de préparation de boissons de la figure 1.
Figure 6 est une vue partielle en coupe longitudinale de l'appareil de préparation de boissons de la figure 1 selon un plan de coupe décalé latéralement par rapport à celui de la figure 5.
Figure 7 est une vue partielle en perspective arrière de l'appareil de préparation de boissons de la figure 1 dans lequel le sous-ensemble a été déposé.

### Description détaillée

Dans le présent document, on entend par machine à café automatique, une machine à café comprenant notamment une chambre d'infusion qui peut être alimentée en mouture de café par un broyeur à grain incorporé dans la machine, ou une chambre d'infusion qui peut recevoir une capsule ou une dosette de café ou une chambre d'infusion formée par une cuillère destinée à être remplie de mouture de café et vidée manuellement.

A défaut de stipulation contraire, le terme « sensiblement » signifie, dans le présent document, « exactement ou à 10% ou à 10° près ».

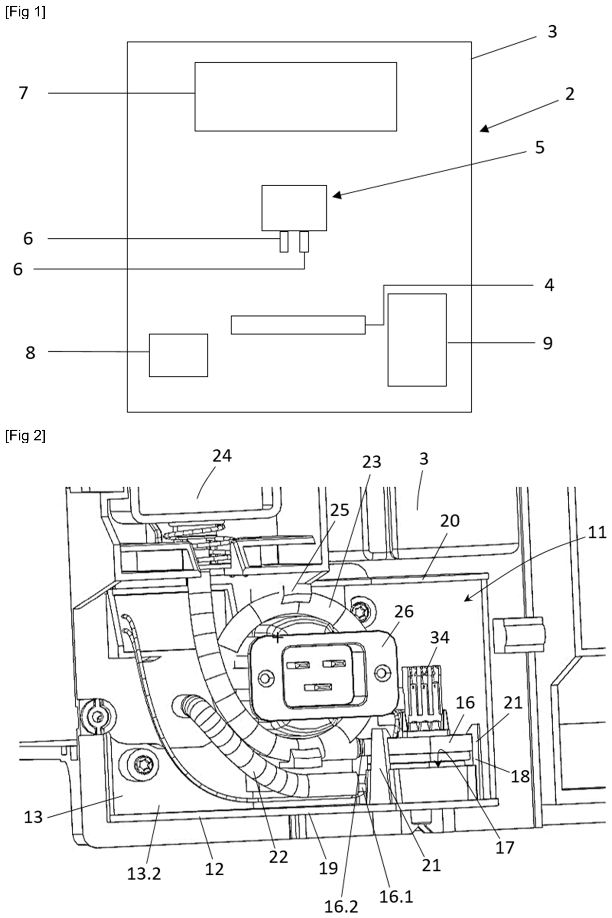

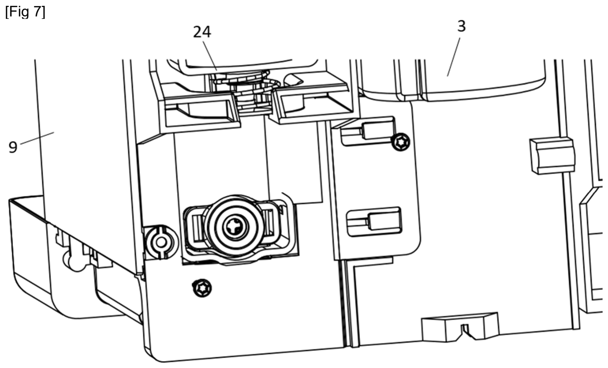

Les figures 1 à 7 représentent un appareil de préparation de boissons 2, telle qu'une machine à café automatique, adapté pour préparer notamment du café, des boissons lactées ou encore du thé.

L'appareil de préparation de boissons 2 comporte notamment un châssis 3 configuré pour reposer sur une surface de travail, telle qu'un plan de travail. Le châssis 3 renferme les principaux éléments fonctionnels de l'appareil de préparation de boissons 2.

L'appareil de préparation de boissons 2 comporte en outre un support de récipient 4 sur lequel un récipient, tel qu'une tasse, peut être disposé, et une tête de distribution de boisson 5 par laquelle une boisson confectionnée par l'appareil de préparation de boissons 2 est apte à s'écouler par gravité dans un récipient positionné sur le support de récipient 4. La tête de distribution de boisson 5 comporte au moins une buse de distribution de boisson 6, et de préférence deux buses de distribution de boisson 6.

L'appareil de préparation de boissons 2 comporte en outre un circuit de commande 7 qui est équipé d'une unité électronique de commande et qui est configuré pour gérer la réalisation d'une boisson à partir des instructions données par un utilisateur.

De façon avantageuse, l'appareil de préparation de boissons 2 comporte également un bloc de chauffe 8, tel qu'une chaudière, configuré pour produire de l'eau chaude et/ou de la vapeur, et un réservoir d'eau 9 configuré pour alimenter en eau le bloc de chauffe 8 de manière à produire de l'eau chaude et/ou de la vapeur. Le bloc de chauffe 8 renferme plus particulièrement un circuit d'eau relié au réservoir d'eau 9 et un élément chauffant électrique.

Le réservoir d'eau 9 peut par exemple être monté de manière amovible sur le châssis 3 et être situé dans une partie latérale du châssis 3. De façon avantageuse, le réservoir d'eau 9 est configuré pour être retiré hors d'un compartiment délimité sur le châssis selon un mouvement de retrait, et par exemple selon un mouvement de translation, qui est dirigé vers l'avant de l'appareil de préparation de boissons 2.

De manière connue et non représentée, l'appareil de préparation de boissons 2 comprend avantageusement un réservoir de grains de café, un moulin à grains automatique, également nommé broyeur, et une chambre d'infusion propre à recevoir les grains de café moulus et à être alimentée en eau, et par exemple en eau chaude par le bloc de chauffe 8 pour la préparation d'une boisson chaude ou en eau à température ambiante pour la préparation d'une boisson infusée à froid. La chambre d'infusion est reliée fluidiquement à la tête de distribution de boisson 5 de manière à ce que l'appareil de préparation de boissons 2 soit propre à distribuer une boisson à base de café au niveau des buses de distribution de boisson 6.

L'appareil de préparation de boissons 2 comporte de plus un sous-ensemble 11 comprenant un corps principal 12 fixé (par exemple par vissage, encliquetage ou par tout autre moyen de fixation approprié) au châssis 3 de l'appareil de préparation de boissons 2. De façon avantageuse, le corps principal 12 est fixé à une portion inférieure d'une partie arrière du châssis 3, et est situé en partie à l'arrière du réservoir d'eau 9. Le corps principal 12 peut par exemple être réalisé en matière plastique.

Le corps principal 12 comporte plus particulièrement une paroi de support 13 comportant une première face 13.1 configurée pour être orientée vers le châssis 3 de l'appareil de préparation de boissons 2, et une deuxième face 13.2 située à l'opposé de la première face 13.1. De façon avantageuse, la paroi de support 13 est configurée pour s'étendre sensiblement verticalement lorsque l'appareil de préparation de boissons 2 repose sur une surface horizontale et que le sous-ensemble 11 est fixé au châssis 3 de l'appareil de préparation de boissons 2.

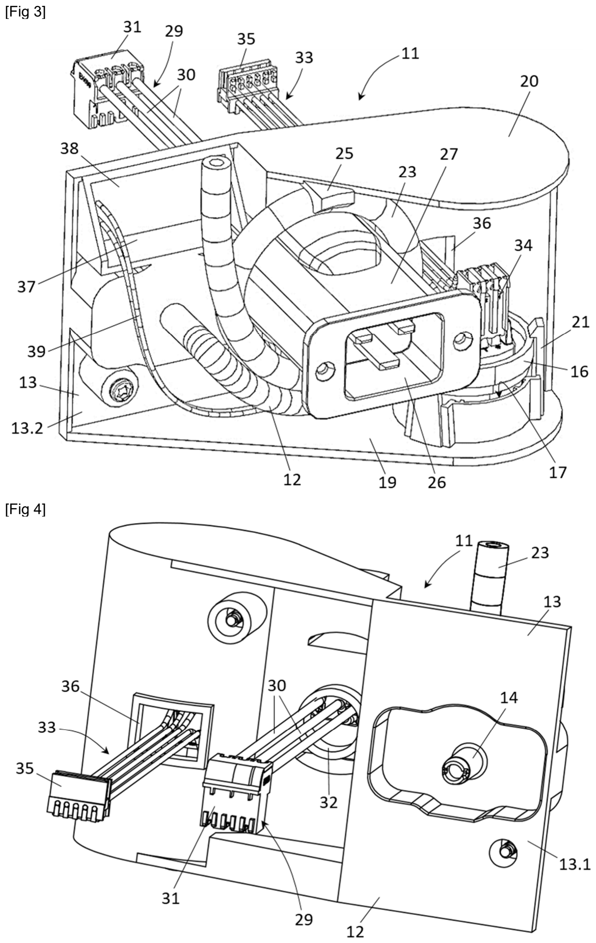

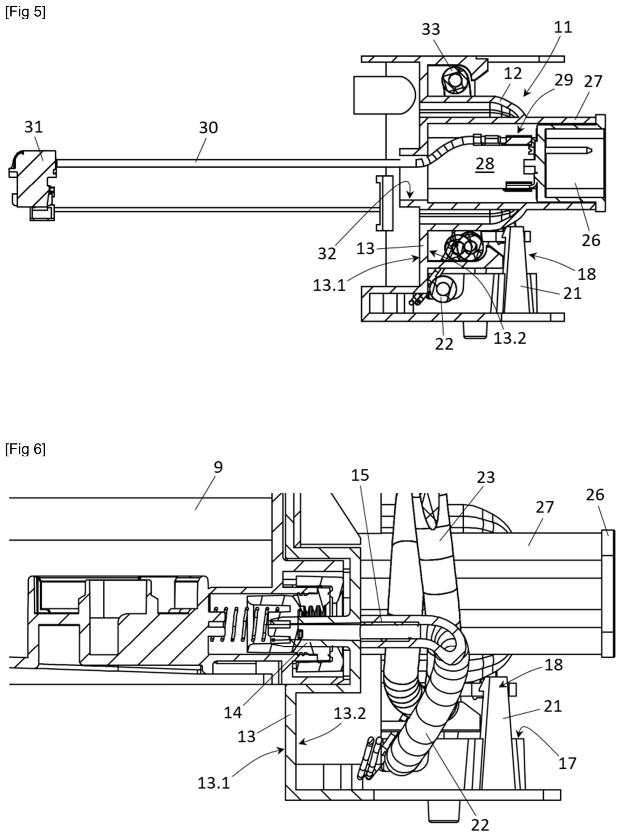

Comme montré sur les figures 4 et 6, la première face 13.1 de la paroi de support 13 est munie d'un connecteur fluidique 14 configuré pour être relié fluidiquement au réservoir d'eau 9 lorsque le sous-ensemble 11 est fixé au châssis 3 de l'appareil de préparation de boissons 2. De façon avantageuse, le connecteur fluidique 14 est plus particulièrement configuré pour être connecté à un dispositif de connexion fluidique prévu sur une partie inférieure arrière du réservoir d'eau 9.

Selon le mode de réalisation représenté sur les figures 1 à 7, le connecteur fluidique 14 s'étend sensiblement perpendiculairement à la paroi de support 13, et le connecteur fluidique 14 est configuré pour être connecté au dispositif de connexion fluidique prévu sur le réservoir d'eau 9 selon un mouvement de connexion qui est orienté sensiblement horizontalement lorsque l'appareil de préparation de boissons 2 repose sur une surface horizontale.

Comme montré sur la figure 6, la deuxième face 13.2 de la paroi de support 13 est munie d'un organe de connexion fluidique 15 qui est relié fluidiquement au connecteur fluidique 14. De façon avantageuse, le connecteur fluidique 14 et l'organe de connexion fluidique 15 s'étendent sensiblement coaxialement et à l'opposé l'un de l'autre. Cependant, selon une variante de réalisation de l'invention, l'organe de connexion fluidique 15 pourrait être configuré pour être orienté sensiblement verticalement.

Le sous-ensemble 11 comporte en outre un débitmètre 16 fixé au corps principal 12 et relié fluidiquement à l'organe de connexion fluidique 15. Le débitmètre 16 est plus particulièrement configuré pour mesurer le débit et/ou le volume d'eau provenant du réservoir d'eau 9 et s'écoulant à travers le connecteur fluidique 14.

Comme montré sur la figure 2, le corps principal 12 comporte un emplacement de réception 17 dans lequel est reçu le débitmètre 16, et un dispositif de fixation 18 configuré pour fixer le débitmètre 16 dans l'emplacement de réception 17. De façon avantageuse, l'emplacement de réception 17 est situé du côté de la deuxième face 13.2 de la paroi de support 13 de telle sorte que le connecteur fluidique 14 et l'emplacement de réception 17 sont disposés de part et d'autre de la paroi de support 13.

Selon le mode de réalisation représenté sur les figures 1 à 7, le corps principal 12 comporte une paroi inférieure 19 s'étendant depuis un bord inférieur de la paroi de support 13, et l'emplacement de réception 17 est prévu sur une face supérieure de la paroi supérieure. De façon avantageuse, l'emplacement de réception 17 forme un logement de réception dans lequel est au moins en partie logé le débitmètre 16. Le logement de réception peut par exemple être ouvert vers le haut, et ainsi comporter une ouverture supérieure à travers laquelle le débitmètre 16 est apte à être inséré dans le logement de réception.

Selon le mode de réalisation représenté sur les figures 1 à 7, le corps principal 12 comporte une paroi supérieure 20 s'étendant depuis un bord supérieur de la paroi de support 13 et positionnée au-dessus du débitmètre 16. La présence d'une telle paroi supérieure 20 permet de protéger le débitmètre 16 notamment de ruissellements d'eau.

Selon le mode de réalisation représenté sur les figures 1 à 7, le dispositif de fixation 18 comporte plusieurs pattes de fixation 21 (par exemple au nombre de deux) qui sont décalées angulairement par rapport à un axe central de l'emplacement de réception 17 et qui sont configurées pour fixer le débitmètre 16 dans l'emplacement de réception 17. De façon avantageuse, les pattes de fixation 21 sont situées sur le pourtour de l'emplacement de réception 17, et chaque patte de fixation 21 est élastiquement déformable et comporte un doigt de retenue configuré pour coopérer avec un bord périphérique supérieur du débitmètre 16.

Le sous-ensemble 11 comprend en outre un tuyau d'arrivée d'eau 22 configuré pour relier fluidiquement le connecteur fluidique 14 à une entrée d'eau 16.1 du débitmètre 16, et un tuyau de sortie d'eau 23 configuré pour relier fluidiquement une sortie d'eau 16.2 du débitmètre 16 à une pompe à eau 24 de l'appareil de préparation de boissons 2. De façon avantageuse, le tuyau d'arrivée d'eau 22 et le tuyau de sortie d'eau 23 sont souples, et sont situés du côté de la deuxième face 13.2 de la paroi de support 13. Selon le mode de réalisation représenté sur les figures 1 à 7, la deuxième face 13.2 de la paroi de support 13 est munie de reliefs de fixation 25, tels que des pattes de retenue, configurés pour fixer le tuyau de sortie d'eau 23 à la paroi de support 13.

Le tuyau d'arrivée d'eau 22 comporte plus particulièrement une première portion d'extrémité qui est raccordée à l'organe de connexion fluidique 15 et une deuxième portion d'extrémité qui est raccordée à l'entrée d'eau 16.1 du débitmètre 16, tandis que le tuyau de sortie d'eau 23 comporte plus particulièrement une première portion d'extrémité qui est raccordée à la sortie d'eau 16.2 du débitmètre 16 et une deuxième portion d'extrémité qui est raccordée à la pompe à eau 24.

Selon le mode de réalisation représenté sur les figures 1 à 7, la pompe à eau 24, qui est reliée fluidiquement au débitmètre 16, est située au-dessus du sous-ensemble 11 et est fixée au châssis 3 de l'appareil de préparation de boissons 2. De façon avantageuse, la pompe à eau 24 est configurée pour être orientée sensiblement verticalement lorsque l'appareil de préparation de boissons 2 repose sur une surface horizontale. La pompe à eau 24 est plus particulièrement configurée pour aspirer de l'eau contenue dans le réservoir d'eau 9 et pour acheminer l'eau aspirée notamment vers le bloc de chauffe 8.

Le sous-ensemble 11 comprend également un connecteur de puissance 26 fixé au corps principal 12 et auquel est destiné à être raccordé, par exemple de manière amovible, un cordon d'alimentation électrique (non représenté sur les figures) de l'appareil de préparation de boissons 2. De façon avantageuse, le connecteur de puissance 26 est configuré pour être orienté sensiblement horizontalement lorsque l'appareil de préparation de boissons 2 repose sur une surface horizontale et que le sous-ensemble 11 est fixé au châssis 3 de l'appareil de préparation de boissons 2.

Selon le mode de réalisation représenté sur les figures 1 à 7, la deuxième face 13.2 de la paroi de support 13 est munie d'un organe de fixation 27 qui est en saillie et auquel est fixé le connecteur de puissance 26. De façon avantageuse, l'organe de fixation 27 présente une forme globalement tubulaire, et délimite un logement interne 28 dans lequel est au moins en partie logé le connecteur de puissance 26. L'organe de fixation 27 peut également être pourvu de fûts de vissage permettant également une fixation par vissage du connecteur de puissance 26 au corps principal 12.

Selon le mode de réalisation représenté sur les figures 1 à 7, l'organe de connexion fluidique 15 et le débitmètre 16 sont disposés de part et d'autre du connecteur de puissance 26, et le tuyau de sortie d'eau 23 s'étend autour de l'organe de fixation 27, et avantageusement forme une boucle s'étendant autour de l'organe de fixation 27.

Le sous-ensemble 11 comprend de plus un faisceau électrique principal 29, également nommé faisceau de puissance ou faisceau électrique de puissance, comprenant des fils électriques 30 fixés respectivement à des bornes de connexion du connecteur de puissance 26, et un connecteur électrique 31 auquel sont reliés électriquement les fils électriques 30 du faisceau électrique principal 29, le connecteur électrique 31 étant apte à être raccordé à un dispositif de connexion électrique (non représenté sur les figures) de l'appareil de préparation de boissons 2, de manière à pouvoir alimenter électriquement l'appareil de préparation de boissons 2, et en particulier l'unité électronique de commande et les différents composants électriques de l'appareil de préparation de boissons 2. De façon avantageuse, la paroi de support 13 comporte un orifice de passage 32 qui débouche dans le logement interne, délimité par l'organe de fixation 27, et à travers lequel s'étendent les fils électriques 30 du faisceau électrique principal 29.

Le sous-ensemble 11 comprend également un faisceau de signal 33 comportant plus particulièrement un premier connecteur électrique 34 raccordé électriquement au débitmètre 16 et un deuxième connecteur électrique 35 apte à être raccordé à un connecteur électrique ou à une carte électronique (non représenté(e) sur les figures) de l'appareil de préparation de boissons 2. De façon avantageuse, la paroi de support 13 comporte une ouverture de passage 36 (voir la figure 4) à travers laquelle s'étendent des fils électriques du faisceau de signal 33.

Selon le mode de réalisation représenté sur les figures 1 à 7, le corps principal 12 comprend un logement d'accueil 37 dans lequel est logée une carte de circuit imprimée 38 (voir la figure 3) appartenant à un dispositif de détection de niveau d'eau configuré pour détecter le niveau d'eau dans la réservoir d'eau 9. De façon avantageuse, le logement d'accueil 37 est prévu sur la deuxième face 13.2 de la paroi de support 13, et les fils d'alimentation électrique 39 de la carte de circuit imprimée 38 s'étendent à travers l'ouverture de passage 36. Les fils d'alimentation électrique 39 peuvent par exemple être intégrés au faisceau de signal 33, ce qui permet de limiter le nombre de connexion électrique à réaliser lors de la fixation du sous-ensemble sur le châssis 3.

La configuration spécifique du sous-ensemble 11, et notamment le fait que le connecteur fluidique 14, le débitmètre 16, le tuyau d'arrivée d'eau 22, le tuyau de sortie d'eau 23, le connecteur de puissance 26, le faisceau électrique principal 29, le faisceau de signal 33 et la carte de circuit imprimée 38 soient fixés sur le corps principal 12, permet de simplifier grandement l'assemblage final de l'appareil de préparation de boissons 2 et de réduire également sensiblement la durée d'assemblage de ce dernier. En effet, un opérateur n'a plus à fixer de manière séquentielle les différents composants appartenant au sous-ensemble 11 sur l'appareil de préparation de boissons 2, il lui suffit au contraire de fixer le sous-ensemble 11 (qui est avantageusement réalisé en dehors de la ligne d'assemblage final), par exemple par vissage ou clipsage, sur le châssis 3 de l'appareil de préparation de boissons 2.

Selon une mode de réalisation de l'invention non représenté sur les figures, l'organe de connexion fluidique 15 et le connecteur de puissance 26 pourraient être disposés de part et d'autre du débitmètre 16, et la carte de circuit imprimée 38, appartenant au dispositif de détection de niveau d'eau, pourrait être logée dans un logement d'accueil 37 prévu sur la première face 13.1 de la paroi de support 13.

Selon encore un autre mode de réalisation non représenté sur les figures, la carte de circuit imprimée 38 pourrait être fixée directement au châssis 3 de l'appareil de préparation de boissons 2.

Selon encore un autre mode de réalisation non représenté sur les figures, le sous-ensemble pourrait être pourvu d'un couvercle de protection fixé, par exemple de manière amovible, au corps principal et configuré pour recouvrir au moins en partie le débitmètre 16, de manière à protéger ce dernier (et avantageusement également les différentes connexions électriques équipant le sous-ensemble) des ruissellements d'eau ou autres pollutions.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

## Revendications

1. Sous-ensemble (11) pour appareil de préparation de boissons (2) comprenant :
- un corps principal (12) configuré pour être fixé à un châssis (3) de l'appareil de préparation de boissons (2), le corps principal (12) comprenant une paroi de support (13) comportant une première face (13.1) munie d'un connecteur fluidique (14) configuré pour être relié fluidiquement à un réservoir d'eau (9) de l'appareil de préparation de boissons (2) lorsque le sous-ensemble (11) est fixé au châssis (3) de l'appareil de préparation de boissons (2) et une deuxième face (13.2) opposée à la première face (13.1), et
- un débitmètre (16) fixé au corps principal (12) et relié fluidiquement au connecteur fluidique (14),
le corps principal (12) comprenant un emplacement de réception (17) dans lequel est reçu le débitmètre (16), l'emplacement de réception (17) étant situé du côté de la deuxième face (13.2) de la paroi de support (13) de telle sorte que le connecteur fluidique (14) et l'emplacement de réception (17) sont disposés de part et d'autre de la paroi de support (13).

2. Sous-ensemble (11) selon la revendication 1, dans lequel le corps principal (12) comporte un dispositif de fixation (18) configuré pour fixer le débitmètre (16) dans l'emplacement de réception (17).

3. Sous-ensemble (11) selon la revendication 1 ou 2, dans lequel l'emplacement de réception (17) forme un logement de réception dans lequel est au moins en partie logé le débitmètre (16).

4. Sous-ensemble (11) selon l'une quelconque des revendications 1 à 3, dans lequel le connecteur fluidique (14) est configuré pour être connecté au réservoir d'eau (9) de l'appareil de préparation de boissons (2) selon un mouvement de connexion qui est orienté sensiblement horizontalement lorsque l'appareil de préparation de boissons (2) repose sur une surface horizontale.

5. Sous-ensemble (11) selon l'une quelconque des revendications 1 à 4, lequel comprend un tuyau d'arrivée d'eau (22) configuré pour relier fluidiquement le connecteur fluidique (14) à une entrée d'eau (16.1) du débitmètre (16), et un tuyau de sortie d'eau (23) configuré pour relier fluidiquement une sortie d'eau (16.2) du débitmètre (16) à une pompe à eau (24) de l'appareil de préparation de boissons (2) lorsque le sous-ensemble (11) est fixé au châssis (3) de l'appareil de préparation de boissons (2).

6. Sous-ensemble (11) selon la revendication 5, dans lequel la deuxième face (13.2) de la paroi de support (13) est munie d'un organe de connexion fluidique (15) qui est relié fluidiquement au connecteur fluidique (14) et auquel est raccordé le tuyau d'arrivée d'eau (22).

7. Sous-ensemble (11) selon l'une quelconque des revendications 1 à 6, lequel comprend un connecteur de puissance (26) fixé au corps principal (12) et auquel est destiné à être raccordé un cordon d'alimentation électrique de l'appareil de préparation de boissons (2).

8. Sous-ensemble (11) selon la revendication 7, lequel comprend un faisceau électrique principal (29) comprenant des fils électriques (30) fixés respectivement à des bornes de connexion du connecteur de puissance (26), et un connecteur électrique (31) auquel sont reliés électriquement les fils électriques (30) du faisceau électrique principal (29), le connecteur électrique (31) étant apte à être raccordé à un dispositif de connexion électrique de l'appareil de préparation de boissons (2) lorsque le sous-ensemble (11) est fixé au châssis (3) de l'appareil de préparation de boissons (2).

9. Sous-ensemble (11) selon la revendication 8, dans lequel le corps principal (12) comporte un orifice de passage (32) à travers lequel s'étendent les fils électriques (30) du faisceau électrique principal (29).

10. Sous-ensemble (11) selon l'une quelconque des revendications 1 à 9, lequel comprend un faisceau de signal (33) comportant un premier connecteur électrique (34) raccordé électriquement au débitmètre (16) et un deuxième connecteur électrique (35) apte à être raccordé à un dispositif électrique de l'appareil de préparation de boissons (2) lorsque le sous-ensemble (11) est fixé au châssis (3) de l'appareil de préparation de boissons (2).

11. Sous-ensemble (11) selon la revendication 10, dans lequel le corps principal (12) comporte une ouverture de passage (36) à travers laquelle s'étendent des fils électriques du faisceau de signal (33).

12. Sous-ensemble (11) selon l'une quelconque des revendications 1 à 11, dans lequel le corps principal (12) comprend un logement d'accueil (37) dans lequel est logée une carte de circuit imprimée (38) appartenant à un dispositif de détection de niveau d'eau configuré pour détecter le niveau d'eau dans la réservoir d'eau (9) de l'appareil de préparation de boissons (2).

13. Appareil de préparation de boissons (2) comprenant un châssis (3), un réservoir d'eau (9) monté sur le châssis (3) et un sous-ensemble (11) selon l'une quelconque des revendications 1 à 12, le corps principal (12) du sous-ensemble (11) étant fixé au châssis (3).

14. Appareil de préparation de boissons (2) selon la revendication 13, comprenant une pompe à eau (24) reliée fluidiquement au débitmètre (16), la pompe à eau (24) étant située au moins en partie au-dessus du sous-ensemble (11).
